# NEUE EUROPÄISCHE PATENTSCHRIFT

(11) **EP 0 156 222 B2**
(45) Veröffentlichungstag und Bekanntmachung des Hinweises auf die Entscheidung über den Einspruch: **01.02.1995**
(45) Hinweis auf die Patenterteilung: 23.05.1990
(21) Anmeldenummer: 85102630.2
(22) Anmeldetag: 08.03.1985
(51) Int. Cl.: F16L 21/02

(54) **Muffenrohrverbindung**
Socket joint
Raccord à manchon

(30) Priorität: 28.03.1984 DE 3411462
(43) Veröffentlichungstag der Anmeldung: 02.10.1985
(73) Patentinhaber: ALPHACAN Omniplast GmbH, D-35627 Ehringshausen (DE)
(72) Erfinder: Nowack, Reinhard, D-6333 Braunfels (DE); Ullmann, Karl, D-6332 Ehringshausen (DE)

(56) Entgegenhaltungen:
- AT-B- 341 286
- DD-A- 120 076
- DE-A- 2 435 089
- DE-A- 2 701 873
- DE-A- 2 731 749
- DE-A- 2 752 077
- DE-B- 1 250 214
- DE-C- 1 118 551
- DE-C- 1 475 715
- DE-U- 1 919 818
- DE-U- 6 909 667
- FR-A- 2 133 173
- GB-A- 1 058 454
- GB-A- 1 411 456
- GB-A- 2 043 802
- SE-B- 316 055
- US-A- 1 945 293
- US-A- 2 914 345
- US-A- 3 856 315
- US-A- 4 275 909
- "Uponyl Tryckrörssystem, Tekniska data", Uponor
- "Monteringanvisning för Lubonyl SKJUTMUFF", AB Lubonyl
- "Forsheda 571, Fjärdertätning" Forsheda, 08/77

## Beschreibung

Die Erfindung bezieht sich auf eine Muffenrohrverbindung mit einem Dichtungsring nach dem Oberbegriff des Patentanspruches 1.

Eine Muffenrohrverbindung mit einem äusseren Anlageteil und einer inneren Dichtlippe des Dichtungsringes ist beispielsweise der DE-A 27 01 873 zu entnehmen. Infolge der Aufspaltung des Dichtungsringes ist eine gute Abdichtung gewährleistet, da sich die Dichtlippe fest an das Spitzende des einzufügenden Rohres anpresst.

Einen Dichtungsring mit Einschnürungen zeigt auch die DE-A 24 35 089. Auch dabei soll eine einwandfreie Abdichtung gewährleistet sein. Das dort dargestellte Ausführungsbeispiel betrifft die Muffenverbindung von Kunststoffrohren mit den allgemein üblichen Muffen- und Sickenkonturen. Die Muffen selbst werden bei solchen Rohren durch Ausweiten des erwähnten Rohres erzeugt. Dabei entsteht eine umlaufende Sicke, die üblicherweise zur Muffenöffnung hin einen geringeren Neigungswinkel besitzt als zum Muffeninneren hin.

Die angestrebte Abdichtung ist mit den bekannten Dichtungsringen zu erzielen. Der leicht verformbare Dichtungsring besitzt aber gewisse Mängel. So ist es ohne besondere Massnahmen nicht möglich, ihn werkseitig einzulegen, da er durch Erschütterungen während des Transportes und vor der Montage aus der Sicke herausfallen würde. Ein weiteres Problem besteht darin, dass die herkömmlichen Dichtungsringe ein Anfasen des Spitzendes erfordern, da das Einschieben sonst kaum möglich wäre. Das Spitzende übt nämlich während des Einschiebens eine hohe Schubkraft auf den Dichtungsring aus und kann diesen aus der Sicke herausdrücken.

Im Bereich der oberen Toleranzen mit einem relativ grossen Spiel zwischen der Muffe und dem Spitzende besteht schliesslich die Gefahr, dass sich der Dichtungsring bei höherem Innendruck in den Spalt hineinpresst oder dass er ganz aus dem Verbindungsbereich herausgedrückt wird. Diese Gefahr wird durch die spezielle Gestaltung der Sicke mit dem geringen Neigungswinkel zur Muffenöffnung hin noch vergrössert. Solche Veränderungen an der Abdichtung haben bei verlegten Rohrleitungen aufwendige Arbeiten zur Folge.

Eine Rohrverbindung, bei welcher das Spitzende eines Rohres in ein Muffenteil eingeschoben wird, wobei das Muffenteil eine umlaufende Ringsicke mit bogenförmiger Kontur aufweist, zeigt die US-A 1 945 293. Der an der Ringsicke eingefügte Dichtungsring besitzt ebenfalls die Aufspaltung in dem zum Muffeninneren weisenden Bereich mit einer am Grund der Ringsicke anliegenden Anlageteil und einer am Spitzende anliegenden Dichtlippe. Da das einzuschiebende Spitzende sofort am Dichtungsring angreift, erfolgt beim Einschieben eine Rollbewegung, so dass der Dichtungsring aus der Ringsicke herausgeschoben werden kann. Da der Anlageteil auch keine Haltefunktion hat, kann ausserdem ein Herauspressen des Dichtungsringes aus der fertigen Rohrverbindung bei höheren Innendrücken nicht verhindert werden, sofern bei entsprechenden Toleranzen ein Ringspalt verhanden ist.

Die US-A-3 856 315 offenbart schließlich eine Muffenrohrverbindung mit den Merkmalen des Oberbegriffs des Anspruches 1. Dabei ist der Innendurchmesser des Haltebereichs über eine größere Länge als die volle Längserstreckung der Aufspaltung größer als der Außendurchmesser des Spitzendes. Er überschreitet diesen aber nur ganz minimal, und zwar bei Ausnutzung der Toleranz nur um 0,001 inches. Dieses Maß ist viel zu gering, um ein freies Einschieben des Spitzendes zu ermöglichen. Da die Höhe des Dichtungsringes mit 0,3325 inches größer ist als die Höhe der Ringsicke mit 0,315 inches, liegt er mit Vorspannung am Grund der Ringsicke an. Er wird jedoch bei sattem Einfügen in die Ringsicke zwangsweise in den freien Einschubbereich hineinragen. Somit setzt das Spitzende auf jeden Fall direkt am Halteteil an. Der Dichtungsring, der eine äußere Abflachung besitzt und etwa der Innenkontur der Ringsicke entspricht, wird beim Einfügen des Spitzendes auf jeden Fall in das Muffeninnere hineingeschoben. Ein weiterer Nachteil des Dichtungsringes nach dieser Schrift besteht darin, daß er nur lose in der Ringsicke liegt. Diese gibt ihm keinerlei Halt. Ferner ist im eigentlichen Sinn keine verpreßbare Kernzone vorhanden, die sich konsequent von dem vorderen Haltebereich abhebt.

Es soll eine Muffenrohrverbindung geschaffen werden, bei welcher der Dichtungsring einwandfrei abdichtet, jedoch nicht aus der Sicke herausfallen kann, und der auch nicht beim Einfügen des Spitzendes oder infolge hohen Innendruckes aus der fertigen Rohrverbindung herausgepresst werden kann. Das Verlegen von Rohrleitungen ohne Anfasen des Spitzendes soll möglich sein.

Die Muffenrohrverbindung gemäss der Erfindung besitzt die im Kennzeichen des Patenanspruches 1 genannten Merkmale.

Dadurch, daß der Innendurchmesser des Haltebereichs den Innendurchmesser der Einschuböffnung der Muffe überschreitet, sind völlig klare Durchmesserverhältnisse geschaffen. Der Haltebereich steht hinter der Einschuböffnung der Muffe zurück. Deshalb ist es völlig ausgeschlossen, während des Einfügens des Spitzendes den Haltebereich zu berühren. Das hebt sich deutlich von der Lehre der US-A-3 856 315 ab, bei der die Durchmesserabstufungen derart gering sind, daß das Spitzende beim Einfügen zwangsweise den Haltebereich berühren muß und dann den Dichtungsring in das Muffeninnere hineindrücken wird. Da das Spitzende zum Einfügen zunächst oft verkantet angesetzt wird, besteht zudem die Gefahr, daß es direkt an der Vorderkante des Dichtungsringes anstößt. Um dieses zu vermeiden, besitzt der Haltebereich gemäß einem besonderen Kennzeichen der Erfindung eine vordere Abschrägung. Der Dichtungsring nach der US-A 3 856 315 besitzt hier nur eine Abrundung, die das Anstoßen des Spitzendes nicht verhindern konnte.

Außer dieser klaren Durchmesserabstufung und vorderen Abschrägung des Dichtungsringes, die ein berührungsloses Einfügen des Spitzendes garantieren, besitzt der Dichtungsring nach der Erfindung noch weitere Vorzüge. Er besitzt eine bogenförmige Außenkontur mit einer äußeren Abflachung. Da im Abdichtbereich eine ausgeprägte, verpreßbare Kernzone vorhanden ist, die bei dem Dichtungsring nach der US-A 3 856 315 fehlt, ist diese Abflachung von Bedeutung. Sobald das im Haltebereich völlig berührungslos eingeführte Spitzende gegen die Kernzone stößt, kann das Material bei der jetzt auftretenden Verpressung der Kernzone in den freien Bereich zwischen der Abflachung und der bogenförmigen Ringsicke hinein ausweichen. Die Kräfte, die beim Einfügen des Spitzendes in Achsrichtung wirken, sind äußerst gering, so daß der Dichtungsring völlig in seiner Lage verharrt.

Die SE-B-316 055 zeigt wohl eine Muffenrohrverbindung, bei der die Ringsicke und der Dichtungsring eine bogenförmige Kontur aufweist und bei der der Dichtungsring eine Abflachung aufweist (Fig. 10). Es handelt sich jedoch nicht um eine "äußere" Abflachung, die der Definition gemäß am Außenumfang liegt. Der Innendurchmesser des Dichtungsringes übersteigt wohl schon an der Einschubseite den Außendurchmesser des Spitzendes und den Innendurchmesser der Einschuböffnung der Muffe. Es fehlt jedoch eine vordere Abschrägung, die bei schrägem Ansetzen des Spitzendes ein Anstoßen am Dichtungsring ausschließt. Der Dichtungsring besteht zudem nicht aus einem Haltebereich mit ausreichender Härte und einem Abdichtbereich aus einer Aufspaltung und einer verpreßbaren Kernzone. Gerade die entscheidende Gestaltung des Dichtungsringes fehlt hier und darüber hinaus ist der Dichtungsring nicht durch eine Vorspannung in der Ringsicke fixiert.

Der Innendurchmesser des Dichtungsringes sollte sich vorzugsweise im Abdichtbereich verjüngen. Damit auch bei einem Spitzende an der oberen Toleranzgrenze der Haltebereich seine Haltefunktion voll erfüllt, empfiehlt es sich, dass der Innendurchmesser des Haltebereichs den Innendurchmesser der Einschuböffnung der Muffe überschreitet. Der Dichtungsring liegt dann im Haltebereich gegenüber der inneren Muffenbegrenzung etwas zurückgesetzt in der Ringsicke. Eine vordere Abschrägung des Dichtungsringes verhindert auch bei schrägem Einfügen des nicht angefasten Spitzendes das Herausstossen des Dichtungsringes aus der Sicke.

Die Aussenkontur des Dichtungsringes passt sich wie üblich etwa der Innenkontur der Ringsicke an. Eine äussere Abflachung verbessert dessen Sitz und führt zu einer Montageerleichterung. Sofern sich der dann folgende Anlageteil des Dichtungsringes mit etwas Vorspannung gegen die Innenwand der Ringsicke anlegt, wird durch eine geringe Stauchung die Lage und die Abdichtfunktion des Dichtungsringes noch verbessert.

Eine spezielle Härte oberhalb von 55 Shore A gibt dem Dichtungsring eine ausreichende Stabilität. Dadurch ist er gegen ein Herausdrücken aus der Muffe gesichert. Er kann bereits werksseitig montiert werden. Ausserdem ist noch eine ausreichende Abdichtfunktion im aufgespaltenen Bereich vorhanden.

Eine bewusste Aufgliederung des Dichtungsringes in ein Weichteil im Abdichtbereich und ein Hartteil im Haltebereich gibt ihm eine besonders gute Abdicht- und Haltefunktion. Das bisher bereits bekannte, einwandfreie Abdichten erfolgt durch das weiche Material. Zum anderen erlaubt das Hartteil aber keine Verschiebungen, weder vor noch nach der Rohrmontage. Der Dichtring kann werkseitig montiert werden. Die Dichtlippe am Weichteil erlaubt in Verbindung mit der Lagesicherung durch das Hartteil das Einfügen des Spitzendes ohne Anfasen.

Als Material für den Dichtungsring eignet sich Naturkautschuk bzw.ein geeigneter synthetischer Kautschuk oder Kautschukverschnitte. Bei einer Aufgliederung in zwei Härtezonen sollte im Bereich des Hartteils eine Shore-Härte von 60, vorzugsweise 80, überschritten sein.

Die beigefügte Zeichnung stellt ein Ausführungsbeispiel der Erfindung dar. Es zeigt:
Fig. 1: einen Teillängsschnitt durch eine Rohrverbindung,
Fig. 2: einen Teillängsschnitt durch die Rohrverbindung im oberen Toleranzbereich und
Fig. 3 u.

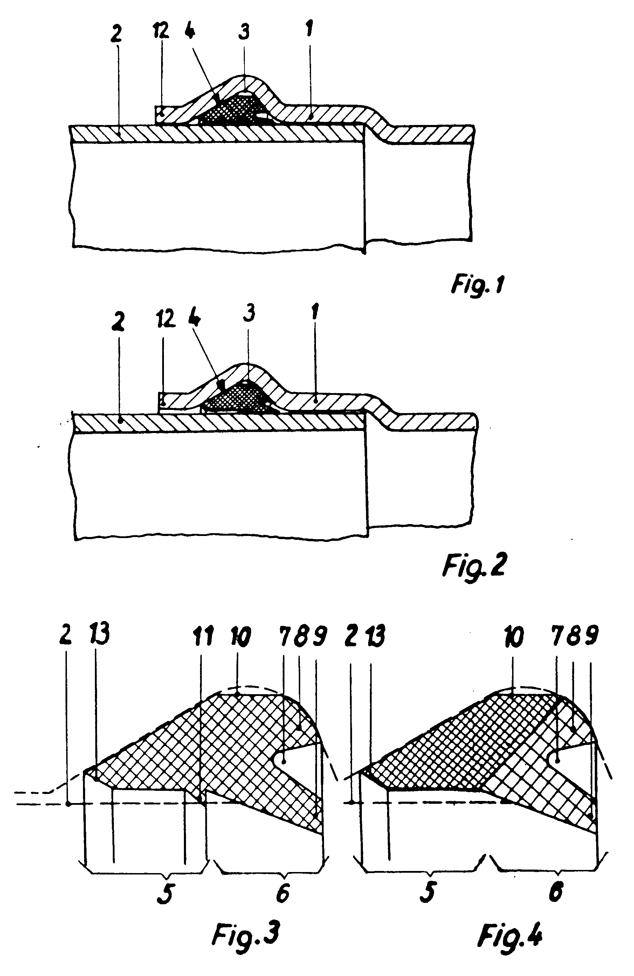

Fig. 4: je einen vergrösserten Schnitt durch den Dichtungsring.

In die Muffe 1 eines Muffenrohres ist das Spitzende 2 eines zweiten Rohres eingeschoben. Die Muffe 1 besitzt eine ausgeformte Sicke 3 mit einem eingefügten Dichtungsring 4. Dieser besteht aus einem Haltebereich 5 mit Haltefunktion und einem Abdichtbereich 6 mit überwiegender Abdichtfunktion. Der Abdichtbereich 6 besitzt eine umlaufende Aufspaltung 7, wodurch er in ein äusseres Anlageteil 8 und eine am Spitzende 2 anliegende Dichtlippe 9 aufgegliedert ist. Eine äussere Abflachung 10 sorgt für einen guten Sitz. Eine Reinigungslippe 11 am Ende des Haltebereiches 5 beseitigt evtl. vorhandenen Schmutz am Spitzende 2 während des Zusammenfügens.

Der Innendurchmesser des Dichtungsringes 4 überschreitet im Haltebereich 5 den Aussendurchmesser des Spitzendes 2 und sogar den Innendurchmesser der Einschuböffnung 12 der Muffe 1. Dadurch kommt der Haltebereich 5 nicht mit dem Spitzende 2 in Eingriff. Er besitzt deshalb während des Einschiebens des Spitzendes 2 eine gute Haltefunktion. Im Abdichtbereich 6 unterschreitet der Innendurchmesser des Dichtungsringes 4 den Aussendurchmesser des Spitzendes 2, wodurch die Abdichtung gewährleistet wird. Der Ansatzpunkt für das Spitzende 2 liegt um mehr als die Längserstreckung der Aufspaltung 7 vom hinteren Ende des Dichtungsringes 4 entfernt, wodurch eine Pressung des vollen Dichtungsquerschnittes erzielt wird.

Gemäss Fig. 1 bis 3 besteht der Dichtungsring aus einem Werkstoff mit einheitlicher Härte. Damit die Haltefunktion gewährleistet ist, sollte eine Härte um 55 Shore A in allen Bereichen vorhanden sein. Gemäss Fig. 4 besitzt der Dichtungsring zwei unterschiedliche Härten. Ein Hartteil im Haltebereich 5 sorgt für eine gute Haltefunktion. Ein Weichteil im Abdichtbereich 6 sichert die Abdichtfunktion.

## Patentansprüche

1. Muffenrohrverbindung mit einem Dichtungsring (4), welcher sich in eine umlaufende Ringsicke (3) am Grund einer Muffe (1) einfügt und welcher einen zum Muffeninneren weisenden Bereich mit einer Aufspaltung (7) in einen äußeren, mit Vorspannung am Grund der Ringsicke (3) anliegenden Anlageteil (8) und eine innere, am Spitzende (2) des einzufügenden Rohres anliegenden Dichtlippe (9) aufweist, sowie mit einem zum Muffenäußeren weisenden, massiven Haltebereich (5), der mit einer für die Haltefunktion ausreichenden Härte versehen ist, dessen Rückenfläche an der Ringsicke (3) anliegt, wobei der Innendurchmesser des Haltebereichs (5) den Außendurchmesser des Spitzendes (2) über eine größere Länge als die volle Längserstreckung der Aufspaltung (7) überschreitet, die Außenkontur des Dichtungsringes (4) eine äußere Abflachung (10) besitzt und etwa der Innenkontur der Ringsicke (3) entspricht und bei dem zwischen dem Haltebereich (5) und der Aufspaltung (7) eine verpreßbare Kernzone liegt, welche mit der aus dem Anlageteil (8) und der Dichtlippe (9) bestehenden Aufspaltung (7) den Abdichtbereich (6) bildet, dessen Innendurchmesser den Außendurchmesser des Spitzendes (2) über eine größere Länge als die volle Längserstreckung der Aufspaltung (7) unterschreitet, dadurch gekennzeichnet, daß der Innendurchmesser des Haltebereichs (5) den Innendurchmesser der Einschuböffnung (12) der Muffe (1) überschreitet, die Ringsicke (3) eine bogenförmige Kontur besitzt und in Verbindung mit der äußeren Abflachung (10) des Dichtungsringes (4) einen Hohlraum bildet und daß der Haltebereich (5) eine vordere Abschrägung (13) besitzt.

2. Muffenrohrverbindung nach Anspruch 1 dadurch gekennzeichnet, daß der Innendurchmesser im Haltebereich (5) konstant ist und sich im Abdichtbereich (6) zum Muffeninneren hin verringert.

3. Muffenrohrverbindung nach Anspruch 1 gekennzeichnet durch eine solche Härte, daß im Abdichtbereich (6) eine ausreichende Abdichtfunktion und im Haltebereich (5) eine ausreichende Haltefunktion vorhanden ist, und zwar letztere infolge einer Mindesthärte von 55 Shore A.

4. Muffenrohrverbindung nach Anspruch 1 dadurch gekennzeichnet, daß der Abdichtbereich (6) als Weichteil mit überwiegender Abdichtfunktion und der Haltebereich (5) als Hartteil mit überwiegender Haltefunktion ausgebildet ist.

5. Muffenrohrverbindung nach den Ansprüchen 1 bis 4 dadurch gekennzeichnet, daß die Abflachung (10) vollständig im Hartteil unter Ausbildung einer beidseitigen Stützfläche angeordnet ist.

## Claims

1. A socket pipe connection with a sealing ring (4) which fits, at the base of a socket joint (1), into an annular groove (3) extending all the way round the socket joint, the said sealing ring (4) having a region which faces towards the interior of the socket joint and which has a split (7) in an outer bearing part (8) which lies with pre-tension against the base of the annular groove (3), and having an inner sealing lip (9) which lies against the leading end (2) of the pipe which is to be inserted, and having a solid holding region (5) which faces towards the exterior of the socket joint and is provided with a hardness sufficient for carrying out the holding function and whose rear surface lies against the annular groove (3), the inside diameter of the holding region (5) exceeding the outside diameter of the leading end (2) over a greater length than the full longitudinal extent of the split (7), the outside contour of the sealing ring (4) having an outer flattened portion (10) and corresponding approximately to the inside contour of the annular groove (3), and in the case of the sealing ring (4) there lying between the holding region (5) and the split (7) a compressible core zone which, together with the split (7) which consists of the bearing part (8) and the sealing lip (9), forms the sealing region (6), the inside diameter thereof being less than the outside diameter of the leading end (2) over a greater length than the full longitudinal extent of the split (7), characterized in that the inside diameter of the holding region (5) exceeds the inside diameter of the insertion opening (12) of the socket joint (1), the annular groove (3) has an arc-shaped contour and, in conjunction with the outer flattened portion (10) of the sealing ring (4), forms a cavity, and in that the holding region (5) has frontal chamfering (13).

2. A socket pipe connection according to Claim 1, characterized in that the inside diameter in the holding region (5) is constant and becomes reduced in the sealing region (6) towards the interior of the socket joint.

3. A socket pipe connection according to Claim 1, characterized by a hardness such that a sufficient sealing function is present in the sealing region (6) and a sufficient holding function is present in the holding region (5), the latter in fact resulting from a minimum hardness of 55 Shore A.

4. A socket pipe connection according to Claim 1, characterized in that the sealing region (6) is constructed as a soft part which predominantly has a sealing function, and the holding region (5) is constructed as a hard part which predominantly has a holding function.

5. A socket pipe connection according to Claims 1 to 4, characterized in that the flattened portion (10) is arranged completely in the hard part and forms a support surface on both sides.

## Revendications

1. Dispositif de raccord de tubes à manchon contenant un anneau de garniture (4) qui est engagé dans une moulure annulaire périphérique (3) dans le fond d'un manchon (1) et qui comprend une zone qui est située du côté de l'intérieur du manchon et comporte une subdivision (7) en une partie extérieure (8) qui s'applique contre le fond de la moulure annulaire (3) avec une précontrainte et en une lèvre d'étanchéité intérieure (9) qui s'applique contre l'extrémité (2) de tube à engager, ainsi qu'une zone de maintien (5) massive qui est située du côté de l'extérieur du manchon, qui présente une dureté suffisante pour la fonction de maintien et dont la surface arrière s'applique contre la moulure annulaire (3), le diamètre intérieur de la zone de maintien (5) étant supérieur au diamètre extérieur de l'extrémité (2) du tube sur une plus grande longueur que la longueur totale de la subdivision (7), le contour extérieur de l'anneau d'étanchéité (4) présentant un méplat (10) extérieur et correspondant à peu près au contour intérieur de la moulure annulaire (3) et une zone centrale compressible étant située entre la zone de maintien (5) et la subdivision (7) qui forme, avec la subdivision (7), constituée par la partie d'appui (8) et la lèvre d'étanchéité (9), la zone d'étanchéité (6) dont le diamètre intérieur est inférieur au diamètre extérieur de l'extrémité (2) du tube sur une plus grande longueur que la longueur totale de la subdivision (7), caractérisé en ce que le diamètre intérieur de la zone de maintien (5) est supérieur au diamètre intérieur de l'ouverture d'engagement (12) du manchon (1), en ce que la moulure annulaire (3) présente un contour en forme d'arc et forme un espace creux avec le méplat (10) extérieur de l'anneau de garniture (4) et en ce que la zone de maintien (5) présente une partie avant oblique (13).

2. Dispositif de raccord de tubes à manchon selon la revendication 1, caractérisé en ce que le diamètre intérieur est constant dans la zone de maintien (5) et en ce qu'il diminue, dans la zone (6) qui assure l'étanchéité, en allant vers l'intérieur du manchon.

3. Dispositif de raccord de tubes à manchon selon la revendication 1, caractérisé par une dureté telle que dans la zone (6) assurant l'étanchéité la fonction d'étanchéité est suffisante et que dans la zone de maintien (5) la fonction de maintien est suffisante, cette dernière résultant d'une dureté minimale de 55 Shore A.

4. Dispositif de raccord de tubes à manchon selon la revendication 1, caractérisé en ce que la zone d'étanchéité (6) est une partie molle remplissant surtout une fonction d'étanchéité et en ce que la zone de maintien (5) est une partie dure remplissant surtout une fonction de maintien.

5. Dispositif de raccord de tubes à manchon selon les revendications 1 à 4, caractérisé en ce que la méplat (10) se trouve entièrement dans la partie dure en formant une surface d'appui des deux côtés.
